# EUROPÄISCHE PATENTSCHRIFT

(11) **EP 1 372 933 B1**
(45) Veröffentlichungstag und Bekanntmachung des Hinweises auf die Patenterteilung: **22.08.2007**
(21) Anmeldenummer: 02722266.0
(22) Anmeldetag: 23.03.2002
(51) Int. Cl.: B29C 45/77, B29C 45/78

(54) **VERFAHREN ZUM HERSTELLEN EINES FORMTEILES IN EINEM FORMWERKZEUG**
METHOD FOR PRODUCING A MOULDED PART IN A MOULD
PROCEDE POUR PRODUIRE UN PIECE MOULEE DANS UN MOULE

(30) Priorität: 05.04.2001 DE 10117001
(43) Veröffentlichungstag der Anmeldung: 02.01.2004
(73) Patentinhaber: Priamus System Technologies AG, 8200 Schaffhausen (CH)
(72) Erfinder: FREY, Jürgen, 73230 Kirchheim/Teck (DE)
(74) Vertreter: Weiss, Peter
(86) Internationale Anmeldenummer: PCT/EP2002/003296
(87) Internationale Veröffentlichungsnummer: WO 2002/081176

(56) Entgegenhaltungen:
- EP-A- 0 535 274
- EP-A- 0 727 297
- DE-A- 2 358 911
- DE-A- 3 801 216
- DE-A- 19 803 352
- FR-A- 2 462 990
- PATENT ABSTRACTS OF JAPAN vol. 12, no. 116 (M-684), 13. April 1988 (1988-04-13) & JP 62 242512 A (JAPAN STEEL WORKS LTD:THE), 23. Oktober 1987 (1987-10-23)
- PATENT ABSTRACTS OF JAPAN vol. 13, no. 274 (M-841), 23. Juni 1989 (1989-06-23) & JP 01 072823 A (HITACHI LTD), 17. März 1989 (1989-03-17)
- PATENT ABSTRACTS OF JAPAN vol. 11, no. 111 (M-578), 8. April 1987 (1987-04-08) & JP 61 255825 A (MITSUBISHI HEAVY IND LTD), 13. November 1986 (1986-11-13)
- PATENT ABSTRACTS OF JAPAN vol. 15, no. 489 (M-1189), 11. Dezember 1991 (1991-12-11) & JP 03 211031 A (SUMITOMO HEAVY IND LTD), 13. September 1991 (1991-09-13)

## Beschreibung

Die Erfindung betrifft ein Verfahren zum Herstellen eines Formteiles in einem Formwerkzeug mit mindestens einer Kavität, welche von einer Werkzeugwand umgeben ist.

In der Vergangenheit (z.B. EP 0 087 069 A1) wurde davon ausgegangen, dass eine möglichst konstante Maschineneinstellung einer Spritzgiess- oder Druckmaschine auch konstante Formteile produziert. Aufgrund der vielseitigen und komplexen Einflüsse, wie z.B. Schwankungen der Materialcharge, Viskositätsschwankungen, Temperatureinflüsse etc., ändern sich die Prozessbedingungen jedoch permanent. Wird demnach die Maschineneinstellung konstant gelassen, ändern sich die Eigenschaften der Formteile mit, d.h., die hergestellten Formteile sind unterschiedlich.

Um die permanenten Einflüsse auf den Spritzgiessprozess auszugleichen, muss sich zwangsläufig die Einstellung der Maschinenparameter ständig anpassen. Dies geschieht heute gemäss der EP 0 897 786 A2 dadurch, dass der Werkzeuginnendruck gemessen und analysiert wird. Das Ergebnis der Analyse ist die Korrektur der Einstellparameter. Gemessen werden die Veränderungen der Einspritzgeschwindigkeit, des Nachdruckes und der Nachdruckzeit. Die einzelnen Prozessphasen werden zeitlich anhand des Werkzeuginnendruckverlaufes analysiert, was ein hohes Mass an Prozess-Know-How voraussetzt.

Eine andere Möglichkeit der Regelung eines Spritzgiessprozesses besteht darin, die Temperatur der Schmelze zu überwachen. In der DE 23 58 911 A werden Druckelemente durch Thermoelemente ersetzt, welche die Massetemperatur bzw. die Fliessfrontgeschwindigkeit im Formhohlraum messen. Die Messwerte werden für die hydraulische Druck- und bzw. oder Geschwindigkeitsregelung der Schnecke verwendet. Dies wird bspw. in der JP 03211031 A beschrieben. In einer weiteren Verbesserung dieses Verfahrens wird nicht nur die Temperatur der Schmelze, sondern auch der Form ermittelt. Diese Möglichkeit wird in der JP 61255825, FR 2 462 990 A, DE 38 01 216 A, JP 01072823 A, EP 0 727 297 A beschrieben. Beispielsweise werden diese beiden Parameter zur Trendregelung des Umschaltpunktes von Spritzdruck auf Nachdruck bei Spritzgiessmaschinen zur Bearbeitung von thermoplastischen Formmassen verwendet, wie dies in der EP 0 535 274 A aufgezeigt ist.

Aus der EP 0 909 626 A2 ist ein Verfahren zum Herstellen eines Formteils in einem Formwerkzeug mit mindestens einer Kavität, welche von einer Werkzeugwand umgeben ist, bekannt. Dabei wird die Temperatur der Werkzeugwand gemessen und analysiert und anhand der Analyse eine Regelung der Werkzeugtemperatur durchgeführt.

Aufgabe der vorliegenden Erfindung ist es, ein Verfahren der o.g. Art zu schaffen, mit welchem die Anzahl der zu verändernden Parameter möglichst klein gehalten und die Analyse der Parameter vereinfacht wird.

Zur Lösung dieser Aufgabe führt, dass die Temperatur der Werkzeugwand gemessen und analysiert wird und anhand der Analyse eine Regelung der Einspritzgeschwindigkeit und/oder des Nachdruckes und/oder der Nachdruckzeit erfolgt.

Bevorzugt geschieht die Messung der Werkzeugwandtemperatur zusammen mit einer Messung des Werkzeuginnendruckes. Aufgrund der gemessenen physikalischen Eigenschaften können nun Rückschlüsse auf die jeweiligen Einstellparameter gezogen werden.

Vor allem kann das Schwindungsverhalten der produzierten Formteile konstant gehalten werden. Bei kleinen Formteilen mit nur einem Temperierkreis erfolgt die Messung der Temperatur bevorzugt am Ende der Kavität, d.h., am Ende der Füllphase. Bei grossen Formteilen wird bevorzugt in der Zone eines jeden Temperierkreises die Temperatur ermittelt.

Ferner dient die Werkzeugwandtemperatur auch der temperaturabhängigen Regelung der Kühlzeit, zur Bestimmung der Umschaltung von Fülldruck auf Nachdruck und zur Balanzierung der volumetrischen Füllung bei Mehrfachwerkzeugen.

Um das Regelverfahren einfacher und insbesondere prozessunabhängiger zu machen, sollen die gemessenen Parameter nicht über der Zeit, sondern über einem Referenzwert desselben Parameters aufgetragen werden. Bei vollständiger Übereinstimmung zwischen aktuellem Wert und Referenzwert ergibt sich ein 45'-Gerade. Dies erleichtert die Handhabung des Verfahrens auch für Personen, die nicht geschult sind.

Der Vorteil des erfindungsgemässen Verfahrens liegt darin, dass auf einfache Art und Weise optimierte Formteile konstant reproduziert werden.

## Patentansprüche

1. Verfahren zum Herstellen eines Formteiles in einem Formwerkzeug mit mindestens einer Kavität, welche von einer Werkzeugwand umgeben ist, wobei die Temperatur der Werkzeugwand gemessen und analysiert wird und anhand der Analyse eine Regelung der Einspritzgeschwindigkeit und/oder des Nachdruckes und/oder der Nachdruckzeit erfolgt.

2. Verfahren nach Anspruch 1, **dadurch gekennzeichnet, dass** auch der Innendruck in der Kavität ermittelt und zur Regelung der Prozessparameter herangezogen wird.

3. Verfahren nach Anspruch 2, **dadurch gekennzeichnet, dass** der Innendruck nahe am Anguss ermittelt wird.

4. Verfahren nach Anspruch 1, **dadurch gekennzeichnet, dass** die ermittelte Temperatur über einem Referenzwert aufgetragen und dargestellt wird.

5. Verfahren nach Anspruch 2 oder 3, **dadurch gekennzeichnet, dass** der Innendruck über einem Referenzwert aufgetragen und dargestellt wird.

## Claims

1. Method of manufacturing a moulded part in a mould having at least one cavity surrounded by a mould wall, wherein the temperature of the mould wall is measured and analyzed and on the basis of the analysis closed-loop control of the injection speed and/or of the holding pressure and/or of the holding pressure time is effected.

2. Method according to claim 1, **characterized in that** the internal pressure in the cavity is also determined and used for closed-loop control of the process parameters.

3. Method according to claim 2, **characterized in that** the internal pressure is determined close to the gate.

4. Method according to claim 1, **characterized in that** the determined temperature is plotted against a reference value and displayed.

5. Method according to claim 2 or 3, **characterized in that** the internal pressure is plotted against a reference value and displayed.

## Revendications

1. Procédé pour produire une pièce moulée dans un moule avec au moins une cavité entourée d'une paroi de moule, la température de la paroi de moule étant mesurée et analysée et sur base de l'analyse ayant lieu une régulation de la vitesse d'injection et/ou de la compression finale et/ou du temps de compression finale.

2. Procédé selon la revendication 1, **caractérisé par le fait que** la pression intérieure dans la cavité est également déterminée et utilisée pour la régulation des paramètres de procédé.

3. Procédé selon la revendication 2, **caractérisé par le fait que** la pression intérieure est déterminée à proximité de l'entrée.

4. Procédé selon la revendication 1, **caractérisé par le fait que** la température déterminée est reportée et représentée au-dessus d'une valeur de référence.

5. Procédé selon la revendication 2 ou 3, **caractérisé par le fait que** la pression intérieure est reportée et représentée au-dessus d'une valeur de référence.
